# FASCICULE DE BREVET EUROPEEN

(11) **EP 3 956 390 B1**
(45) Date de publication et mention de la délivrance du brevet: **09.08.2023**
(21) Numéro de dépôt: 20719174.3
(22) Date de dépôt: 14.04.2020
(51) Int. Cl.: C08J 7/12

(54) **PROCEDE DE FONCTIONNALISATION DE SURFACE EN MILIEU FLUIDE SUPERCRITIQUE**
VERFAHREN ZUR OBERFLÄCHENFUNKTIONALISIERUNG IN EINEM ÜBERKRITISCHEN FLÜSSIGEN MEDIUM
METHOD FOR SURFACE FUNCTIONALISATION IN A SUPERCRITICAL FLUID MEDIUM

(30) Priorité: 16.04.2019 FR 1904061
(43) Date de publication de la demande: 23.02.2022
(73) Titulaire: Commissariat à l'Energie Atomique et aux Energies Alternatives, 75015 Paris (FR)
(72) Inventeur: PONCELET, Olivier, 38054 GRENOBLE Cedex 09 (FR); BLANCHOT, Olivier, 38054 GRENOBLE Cedex 09 (FR); DELMAS, Jérôme, 38054 GRENOBLE Cedex 09 (FR); RENARD, Olivier, 38054 GRENOBLE Cedex 09 (FR); ROUGEAUX, Isabelle, 38054 GRENOBLE Cedex 09 (FR)
(74) Mandataire: Cabinet Nony
(86) Numéro de dépôt international: PCT/EP2020/060427
(87) Numéro de publication internationale: WO 2020/212328

(56) Documents cités:
- EP-A2- 2 497 793
- WO-A1-2008/052568
- US-A1- 2018 298 202
- ETIENNE DELEBECQ ET AL: "On the Versatility of Urethane/Urea Bonds: Reversibility, Blocked Isocyanate, and Non-isocyanate Polyurethane", CHEMICAL REVIEWS, vol. 113, no. 1, 9 janvier 2013 (2013-01-09), pages 80-118, XP055051527, ISSN: 0009-2665, DOI: 10.1021/cr300195n cité dans la demande
- D. A. WICKS ET AL.: "Blocked isocyanates III: Part B: Uses and applications of blocked isocyanates", PROGRESS IN ORGANIC COATINGS, vol. 41, 2001, pages 1-83, XP002794416,

## Description

### Domaine technique

La présente invention se rapporte à une nouvelle méthode pour fonctionnaliser en surface un substrat présentant des fonctions à hydrogène labile, utile par exemple pour fonctionnaliser en surface des matrices organiques polymériques, opérée en milieu fluide supercritique, en particulier en milieu dioxyde de carbone supercritique.

### Technique antérieure

Pour de nombreuses applications, notamment en génie biologique et dans le domaine médical, le contrôle de la nature de surface des matériaux mis en oeuvre, telles que des matrices polymériques organiques, est un moyen d'ajuster et d'optimiser leurs propriétés. Ainsi, de nombreuses technologies ont été proposées pour modifier en surface des substrats, par exemple des matrices organiques polymériques, en vue d'en modifier leurs propriétés physiques, telles que leur couleur, leur résistance à la rayure, leur résistance à l'impact ou leurs propriétés de mouillabilité.

Parmi elles, les technologies permettant de conduire à un greffage covalent d'un groupement ou d'une molécule d'intérêt, en surface du substrat sont particulièrement privilégiées, pour obtenir une fonctionnalisation du substrat durable dans le temps. Également, dans le cadre de la préparation de matériaux pour des applications telles que le génie biologique et médical, l'on privilégie des techniques permettant de minimiser la quantité de résidus dans le matériau formé, ou n'impliquant pas l'utilisation ou la formation de sous-produits annexes, tels que des tensio-actifs, difficiles à éliminer.

Dans cette optique, les fluides dits supercritiques, tels que le dioxyde de carbone supercritique (également noté « CO₂ supercritique » ou « sCO₂ »), ont déjà été proposés comme vecteurs d'imprégnation de substrats. Le CO₂ supercritique est particulièrement avantageux eu égard à son coût, sa facilité de mise en oeuvre, son ininflammabilité, sa nontoxicité et à ses bonnes propriétés de solvant.

### Résumé de l'invention

La présente invention a précisément pour objet de proposer une nouvelle voie pour modifier en surface un substrat, par exemple de type matrice organique polymérique, opérée en milieu fluide supercritique, permettant de répondre aux différentes attentes précitées.

Plus précisément, la présente invention propose une nouvelle méthode pour fonctionnaliser, de manière durable la surface d'un substrat, opérée en milieu fluide supercritique, permettant de conduire au greffage à la surface du substrat, de manière covalente, d'un ou plusieurs groupes d'intérêt, notés R_{f}, en particulier *via* l'établissement de liaisons covalentes de type uréthane, tout en s'affranchissant de la mise en oeuvre de composés isocyanates.

Ainsi, il est décrit un procédé de fonctionnalisation de la surface d'un substrat, opéré dans un milieu fluide supercritique, mettant en oeuvre au moins les étapes consistant en :
(i) disposer d'un substrat présentant en surface des fonctions à hydrogène labile ;
(ii) mettre en présence, dans un fluide supercritique, en particulier dans le CO₂ supercritique, ledit substrat avec au moins une molécule organique, porteuse d'au moins une fonction isocyanate bloquée, apte à être activée par chauffage ; et
(iii) soumettre l'ensemble à une température suffisante pour provoquer le déblocage de ladite fonction isocyanate bloquée portée par la molécule, et le greffage covalent de ladite molécule par réaction de ladite fonction isocyanate avec une fonction à hydrogène labile en surface du substrat.

De préférence, le substrat considéré selon l'invention est une matrice polymérique organique présentant en surface des fonctions à hydrogène labile, telles que plus particulièrement des fonctions hydroxyles.

Par « fluide supercritique », au sens de l'invention, on entend désigner un fluide à un état supercritique, notamment le CO₂ supercritique.

Dans le cadre du procédé revendiqué, le fluide supercritique est le CO₂ supercritique.

De manière avantageuse, l'ensemble des étapes du procédé de l'invention peuvent être opérées au sein d'un même réacteur (autoclave), adapté pour travailler dans un fluide à un état supercritique, par exemple du CO₂ supercritique. Ainsi, dans la suite du texte, on parlera de « réacteur » pour désigner le réacteur ou autoclave dans lequel sont opérées les étapes du procédé selon l'invention. Il s'agit plus particulièrement d'un réacteur fonctionnant en mode discontinu (« batch reactor »).

Par « fonction isocyanate bloquée », on entend désigner une fonction isocyanate inactivée par la présence d'un agent de blocage, tel que décrit plus précisément dans la suite du texte.

Une fonction isocyanate bloquée peut être susceptible d'être débloquée, c'est-à-dire activée, sous l'effet de la chaleur.

Plus particulièrement, comme détaillé dans la suite du texte, une fonction isocyanate bloquée peut être apte à être débloquée pour générer une fonction isocyanate, par chauffage au-delà d'une température donnée, dite température d'activation.

Une fonction isocyanate bloquée peut être notamment une fonction de type uréthane ou une fonction de type urée. Au sens de l'invention, on caractérise une fonction, par exemple de type uréthane ou urée, de « réversible » ou encore « thermolabile », lorsqu'elle est apte à générer une fonction isocyanate par chauffage.

De manière avantageuse, le procédé de l'invention permet de s'affranchir de l'utilisation de solvants, en particulier de solvants organiques inflammables et/ou toxiques.

De fait, contrairement aux solvants organiques, les fluides supercritiques, tels que le CO₂ supercritique, ne nécessitent pas d'étape de recyclage ou de traitement à l'issue de leur utilisation. Par exemple, le dioxyde de carbone peut être libéré sous forme de gaz à l'issue du traitement. Dans le cadre d'un réacteur industriel, le CO₂ peut également être recyclé.

D'autre part, le procédé de l'invention permet avantageusement de s'affranchir de la manipulation de composés isocyanates, puisque seules des molécules porteuses de fonctions isocyanates bloquées, non réactives, sont chargées dans le réacteur lors de la mise en oeuvre du procédé de l'invention, les fonctions isocyanates réactives étant uniquement générées *in situ* au niveau du substrat à fonctionnaliser dans le réacteur, par chauffage. Le procédé de l'invention permet ainsi de répondre aux contraintes réglementaires environnementales de plus en plus restrictives sur l'emploi des isocyanates, hors intermédiaires de synthèse.

Qui plus est, le fait de transporter par le fluide supercritique, notamment par le CO₂ supercritique, une molécule portant une fonction isocyanate bloquée apporte avantageusement une grande flexibilité pour opérer le greffage de la molécule en surface du substrat. En particulier, dans le cas où l'on souhaite accroître la solubilité de la molécule à greffer dans le fluide supercritique, sans pour autant accroître la pression et/ou la température, il est possible, dans le cadre du procédé selon l'invention, d'ajouter un ou plusieurs co-solvants tels que le méthanol ou l'éthanol. Pour des raisons évidentes, l'ajout de tels co-solvants ne serait pas envisageable dans le cas de la mise en oeuvre de composés porteurs de fonctions isocyanates non bloquées.

De même, le procédé de l'invention ne requiert pas de mettre en oeuvre un traitement préalable de déshydratation du substrat à fonctionnaliser pour éliminer l'eau libre résiduelle, ni d'opérer sous atmosphère contrôlée (azote ou argon).

Par ailleurs, le procédé de l'invention ne requiert pas d'étapes de lavage et/ou de purification pour récupérer, à l'issue du greffage covalent de ladite molécule, le substrat ainsi modifié en surface, dans la mesure où le fluide supercritique permet d'éliminer aisément l'ensemble des sous-produits formés au cours du procédé de l'invention, comme par exemple les agents de blocage libérés au cours de l'activation des fonctions isocyanates bloquées, le(s) solvant(s) éventuel(s) ou les produits non consommés.

Enfin, comme détaillé dans la suite du texte, il est possible, en mettant en oeuvre des molécules porteuses de plusieurs fonctions isocyanates bloquées distinctes, par exemple des molécules dérivées de composés diisocyanates ou triisocyanates, d'optimiser le taux de greffage (ou taux de couverture) obtenu, autrement dit de maximiser la quantité de groupes d'intérêt greffés par sites disponibles (fonctions à hydrogène labile réactives) à la surface du substrat.

D'autres caractéristiques, variantes et avantages du procédé de fonctionnalisation selon l'invention ressortiront mieux à la lecture de la description, des exemples et figures qui vont suivre, donnés à titre illustratif et non limitatif de l'invention.

### Brève description des dessins

[Fig 1] représente, de manière schématique, la préparation d'un composé présentant une fonction uréthane et une fonction urée thermolabiles (fonctions isocyanates bloquées), selon l'exemple 1.
[Fig 2] représente, de manière schématique, les réactions pour la fonctionnalisation en surface d'un substrat selon l'exemple 1, à partir d'un composé présentant une fonction uréthane et une fonction urée thermolabiles ;
[Fig 3] représente, de manière schématique, les réactions pour la fonctionnalisation en surface d'un substrat selon l'exemple 2, à partir d'un composé triuréthane, dont une unique fonction uréthane est thermolabile ;
[Fig 4] représente, de manière schématique, les réactions pour la fonctionnalisation en surface d'un substrat selon l'exemple 3, à partir d'un composé trifonctionnel présentant deux fonctions urée et une fonction uréthane thermolabiles.

Dans la suite du texte, les expressions « compris entre ... et ... » et « allant de ... à ... » et « variant de ... à ... » sont équivalentes et entendent signifier que les bornes sont incluses, sauf mention contraire.

Sauf indication contraire, l'expression « comportant/comprenant un(e) » doit être comprise comme « comportant/comprenant au moins un(e) ».

### Description détaillée

### MILIEU FLUIDE SUPERCRITIQUE

Comme évoqué précédemment, le procédé de l'invention est opéré dans un fluide à un état supercritique. On parle plus simplement dans la suite du texte, de « milieu supercritique ». Ce fluide supercritique est généré à partir d'un gaz d'au moins un composé aprotique sec. Au sens de l'invention, un fluide est utilisé dans sa phase supercritique lorsque sa température est portée au-delà de sa température critique et qu'il est comprimé au-dessus de sa pression critique.

Les fluides supercritiques peuvent être par exemple le dioxyde de carbone, l'éthane, le propane, le butane, le diméthyléther, et leurs mélanges, à l'exclusion de l'eau.

Dans le cadre de l'invention revendiquée, le procédé de fonctionnalisation selon l'invention est opéré dans le CO₂ supercritique.

Le réacteur chargé en CO₂ supercritique peut être plus particulièrement maintenu, au cours du procédé de fonctionnalisation selon l'invention, dans des conditions de pression comprise entre 70 bar et 1000 bar, en particulier entre 100 bar et 350 bar, et de température comprise entre 34°C et 170 °C, notamment entre 70 °C et 120 °C.

Les conditions de pression et de température sont plus particulièrement ajustées au regard de la stabilité thermique du substrat à fonctionnaliser, ou encore au regard de la température de déblocage de la fonction isocyanate de la molécule à greffer.

### SUBSTRAT A FONCTIONS A HYDROGENE LABILE

Comme mentionné ci-dessus, le procédé de l'invention permet de fonctionnaliser un substrat présentant en surface des fonctions à hydrogène labile.

Une fonction à hydrogène labile est apte à interagir avec une fonction isocyanate pour former une liaison covalente.

Le substrat mis en oeuvre selon l'invention peut être de diverses natures, pour autant qu'il présente, éventuellement à l'issue d'un traitement préalable, des fonctions à hydrogène labile, réactives avec des fonctions isocyanates.

Les fonctions à hydrogène labile peuvent être notamment choisies parmi les fonctions hydroxyle (-OH), amine primaire (-NH₂), amine secondaire (-NHR) et acide carboxylique (-COOH).

De préférence, comme illustré dans les exemples qui suivent, le substrat est porteur de fonctions hydroxyle, aptes à interagir avec des fonctions isocyanates pour former des liaisons covalentes de type uréthane.

Le substrat peut être de nature organique et/ou inorganique.

Il peut être choisi parmi des matrices polymériques organiques, incorporant éventuellement une ou plusieurs charges inorganiques, et des substrats inorganiques.

Il peut être de forme et de dimensions diverses, par exemple sous la forme d'un substrat plan ou sous une forme particulaire, par exemple sous forme de microparticules.

Selon un mode de réalisation particulier, le substrat comprend, voire est formé, d'une matrice polymérique organique.

Le substrat polymérique organique peut notamment être choisi dans le groupe comprenant les fibres de cellulose (cellulose amorphe ou cristallisée), tel que le coton et le papier, le bois, le polyméthylméthacrylate (PMMA), l'éthylène-acétate de vinyle (EVA), le polyacétate de vinyle (PVA) partiellement ou totalement hydrolysé, de préférence présentant un taux d'hydrolyse supérieur à 88%, et les polyamides, tel que le polyamide 6 (PA6), le polyamide 6-6 (PA66), le polyamide 11 (PA11) et le polyamide 12 (PA12).

Selon encore une autre variante de réalisation, le substrat peut être de nature inorganique. Il peut s'agir par exemple d'un substrat en fibres de verre, en silice, titane, hydroxyapatite, CaCO₃, Al₂O₃, hydroxyde de magnésium, talc, trihydroxyde d'aluminium, argile phyllosilicate, smectite, laponite, cloisite, hectorite, halloysite, imogolite, allophane, gibbsite, sepiolite, etc.

De préférence, il s'agit d'un substrat en silice.

Les fonctions hydroxyles réactives en surface du substrat inorganique (motifs silanols Si-OH) peuvent être obtenues par un traitement de déshydratation de surface préalable du substrat.

De manière avantageuse, ce traitement peut être opéré en milieu supercritique, par exemple en milieu CO₂ supercritique. L'ajustement des conditions de mise en oeuvre du traitement de déshydratation au contact du CO₂ supercritique relève des compétences de l'homme du métier.

De préférence, la température du traitement de déshydratation peut être comprise entre 50 °C et 170°C, en particulier entre 50 °C et 100 °C. La pression lors du traitement de déshydratation peut être comprise entre 80 bar et 400 bar, en particulier entre 200 et 300 bar. De manière avantageuse, le traitement de déshydratation de surface du substrat et les étapes de fonctionnalisation de la surface selon le procédé de l'invention (étapes (ii) et (iii)) décrites dans la suite du texte, peuvent être réalisés successivement au sein d'un même réacteur, sans ôter le substrat du réacteur.

Le substrat peut encore être de nature composite. Les substrats composites comprennent, d'une manière générale, une matrice polymérique, dans laquelle sont dispersées des charges sous forme de particules de forme et taille variées.

Le substrat peut par exemple comprendre une matrice polymérique organique, dans laquelle sont dispersées une ou plusieurs charges inorganiques telles que décrites précédemment.

La matrice polymérique peut être de diverses natures, par exemple être telle que décrite précédemment, ou encore être de type polyoléfine, par exemple en polyéthylène (PE) et/ou polypropylène (PP), en poly(téréphtalate d'éthylène) (PET) ou en poly(téréphtalate de butylène) (PBT). Les charges peuvent être par exemple des fibres ou billes de verre, de la silice, des argiles, l'hydroxyde d'aluminium (Al(OH)₃), l'aluminium oxyhydroxyde (AlO(OH)) et le talc, etc.

### GREFFAGE COVALENT D'UNE MOLECULE PORTEUSE DE FONCTION(S) ISOCYANATE(S) BLOOUEE(S)

La molécule, porteuse d'une ou plusieurs fonctions isocyanates bloquées, mise en oeuvre en étape (ii) du procédé de l'invention, peut être bien entendu de diverses natures, au regard notamment de l'application visée pour le substrat fonctionnalisé selon l'invention.

En particulier, comme détaillé dans la suite du texte, la molécule peut comporter, outre au moins ladite fonction isocyanate bloquée destinée à permettre, par activation, le greffage en étape (iii) de ladite molécule par interaction entre une fonction à hydrogène labile de surface et la fonction isocyanate activée, un ou plusieurs groupes, noté R_{f}, ayant des propriétés d'intérêt, dit encore « groupes d'intérêt ».

Un « groupe d'intérêt » au sens de l'invention désigne un groupement ayant des propriétés particulières et que l'on veut greffer sur la surface du support. Il peut être de diverses natures, en fonction de la fonctionnalité recherchée.

Selon une variante de réalisation, comme détaillé dans la suite du texte, la molécule peut ainsi comporter, outre ladite fonction isocyanate bloquée destinée à permettre, par activation en étape (iii), le greffage de ladite molécule par interaction entre une fonction à hydrogène labile de surface, au moins un groupement à insaturation(s) éthylénique(s) polymérisable par voie radicalaire. Un tel groupement à insaturation(s) éthylénique(s) pourra, ultérieurement au greffage de la molécule en surface du substrat, participer à une polymérisation radicalaire activée chimiquement ou par irradiation.

Selon une autre variante de réalisation, la molécule peut comporter, outre ladite fonction isocyanate bloquée destinée à permettre, par activation en étape (iii), le greffage de ladite molécule par interaction entre une fonction à hydrogène labile de surface, une ou plusieurs autres fonctions isocyanates bloquées, non réactives dans les conditions de chauffage mises en oeuvre en étape (iii).

La ou lesdites fonctions isocyanates bloquées, présentes au niveau de la molécule greffée à l'issue de l'étape (iii) du procédé de l'invention, peuvent porter un groupe d'intérêt R_{f}, ou être, ultérieurement au greffage de la molécule en étape (iii), activées (débloquées) pour être transformées en groupes d'intérêt.

La molécule porteuse d'au moins une fonction isocyanate bloquée peut être soluble dans le fluide supercritique mis en oeuvre, notamment dans le CO₂ supercritique. C'est le cas notamment pour des molécules portant des groupements qui augmentent l'hydrophobie de la molécule ou encore des groupements formant peu de liaisons hydrogène.

Par « soluble » dans le fluide supercritique, on entend signifier qu'il est possible de dissoudre, dans les conditions de mise en oeuvre, ladite molécule à raison d'au moins 5 g de composé pour 100 g de fluide supercritique. L'homme du métier est à même d'ajuster les conditions opératoires de mise en oeuvre permettant d'introduire la quantité souhaitée de molécules pour opérer le greffage. Notamment, il est possible, en ajustant la pression au sein du réacteur, d'augmenter la concentration en molécules pouvant être mis en oeuvre.

Alternativement, la moléculaire porteuse d'au moins une fonction isocyanate bloquée peut présenter une solubilité dans le fluide supercritique inférieure à 5 g de composé pour 100 g de fluide supercritique. Dans ce cas, il est possible d'accroître la solubilité de la molécule à greffer par ajout d'un ou plusieurs co-solvants, tels que, par exemple, l'acétone, l'éthanol, le méthanol ou le THF.

Une « fonction isocyanate bloquée » est une fonction isocyanate inactivée par la présence d'un agent de blocage, et susceptible d'être débloquée, c'est-à-dire activée, sous l'effet de la chaleur. La libération de la fonction isocyanate se produit au cours d'une réaction chimique activée thermiquement, de sorte qu'à une température inférieure à une température donnée, dite température d'activation ou de déblocage de la fonction isocyanate bloquée, la fonction isocyanate n'est pas accessible.

Une fonction isocyanate bloquée, portée par la molécule mise en oeuvre selon le procédé de l'invention, peut répondre plus particulièrement à la formule :

[Chem 1] -NH-C(=O)-B _{(I)},

dans laquelle B représente un radical dérivé d'un agent de blocage BH choisi parmi les composés organiques comportant un ou plusieurs, de préférence un seul atome d'hydrogène labile.

Les agents de blocage empêchent la réaction des groupes isocyanates, à une température inférieure à la température d'activation, avec des atomes d'hydrogène labiles, mais permettent une telle réaction à une température au-dessus de ladite température d'activation, après déblocage thermique de la fonction isocyanate.

La température d'activation d'une fonction isocyanate bloquée dépend bien entendu notamment de la nature chimique de l'agent bloquant.

De préférence, la température d'activation de ladite fonction isocyanate bloquée est comprise entre 75 °C et 170 °C, de préférence entre 75 °C et 120 °C. En particulier, elle est inférieure ou égale à 120 °C, en particulier inférieure à 100 °C, voire inférieure ou égale à 80°C, afin d'éviter toute dégradation thermique du substrat à fonctionnaliser.

Avantageusement, la fonction isocyanate générée après chauffage en étape (iii) présente une excellente réactivité, permettant une réaction rapide avec les fonctions à hydrogène labile en surface du substrat.

Les agents de blocage peuvent être de diverses natures. L'homme du métier est à même de mettre en oeuvre un agent de blocage approprié, en particulier au regard de la température d'activation souhaitée pour la fonction isocyanate bloquée.

L'agent de blocage peut être par exemple choisi parmi :
- les alcools, notamment les monoalcools, comportant de préférence de 1 à 10 atomes de carbone, par exemple le butanol, l'éthanol ou l'isopropanol ;
- les phénols, notamment les monophénols, comportant en particulier de 6 à 50 atomes de carbone, de préférence de 6 à 20 atomes de carbone, tels que l'ortho-crésol, le para-crésol, le 2,6-diméthylphénol, le 2-tert-butylphénol ;
- les amides et en particulier les amides cycliques, comportant notamment de 3 à 50 atomes de carbone, telles que le caprolactame, le méthylacétamide, les imides tels que le succinimide et les succinimides substitués notamment par un ou deux radicaux alkyles en Ci-6 ;
- les oximes, notamment ceux en C₂₋₅, tels que l'acétone-oxime, la méthyléthylcétone-oxime (MEKO), la méthylisopropylcétone-oxime, la 2-butanone oxime, la méthylisobutylcétoneoxime, la diisobutylcétone-oxime et la diisopropylcétone-oxime ;
- les composés β-dicarbonyle, notamment les β-diesters, les β-dicétones et les β-ester cétones, tels que les malonates de dialkyle en C₁₋₆, par exemple le malonate de diéthyle, les acétoacétates d'alkyle en C₁₋₆, par exemple l'acétoacétate d'éthyle ou l'acétoacétate de tertbutyle, ou encore la 2,4-pentanedione ;
- les pyrazoles, en particulier le 3-méthylpyrazole et le 3,5-diméthylpyrazole,
- les esters d'acide hydroxycinnamique et d'alcools en C₁₋₆,
- les triazoles tels que le benzotriazole,
- les imidazolines telles que la 2-péhnylimidazoline, la 2,4-diméthylimidazoline et la 4-méthylimidazoline,
- les tétrahydropyrimidines, et
- les imidazoles, tels que le 2-éthyl-4-méthylimidazole.

Des exemples de réactifs de blocage sont par exemple donnés dans la publication Rolph *et al. [1].*

De préférence, l'agent de blocage est choisi parmi les alcools, en particulier les monoalcools, les oximes, notamment la méthyléthylcétone-oxime (MEKO) ou la 2-butanone-oxime et les amides cycliques, en particulier le caprolactame.

La fonction isocyanate bloquée peut ainsi être plus particulièrement une fonction de type uréthane ou urée. Elle peut ainsi répondre à la formule (I) précitée, dans laquelle B représente :
u n radical -OR, avec R représentant groupement alkyle linéaire ou ramifié en C₁ à C₆, en particulier en C₂ à C₄ ; ou
u n radical -O-N=CR¹R², avec R¹ et R² représentant, indépendamment l'un de l'autre, un atome d'hydrogène ou un groupe alkyle linéaire ou ramifié en C₁ à C₆, de préférence des groupes alkyles en C₁ à C_{4 ;} ou
u n radical-NR'R" avec R' et R" formant ensemble avec l'atome d'azote qui les portent un groupe cyclique lactame.

Les groupes lactames représentent des groupements de formule : 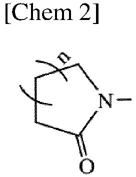 avec n représentant 0, 1, 2 ou 3.

Selon un mode de réalisation particulier, la molécule mise en oeuvre en étape (ii) du procédé de l'invention porte une unique fonction isocyanate bloquée, par exemple une fonction de type uréthane.

Elle peut être obtenue par réaction entre un agent de blocage approprié et un composé comportant une fonction isocyanate libre. Des exemples de telles molécules sont donnés dans la suite du texte.

Selon un autre mode de réalisation particulier, comme décrit dans la suite du texte, la molécule mise en oeuvre en étape (ii) du procédé de l'invention peut porter au moins deux fonctions isocyanates bloquées, en particulier deux ou trois fonctions isocyanates bloquées. De préférence, la molécule présente au moins deux fonctions isocyanate bloquées, notamment de type uréthane ou urée, distinctes, en particulier présentant des températures d'activation distinctes.

Les molécules portant au moins deux fonctions isocyanate bloquées peuvent être obtenues par réaction entre un ou plusieurs agents de blocage appropriés et un composé comportant au moins deux fonctions isocyanate, en particulier comprenant deux ou trois fonctions isocyanate.

Des composés comportant au moins deux fonctions isocyanate libres ont déjà été décrits dans la littérature, par exemple dans la publication Delebeck *et al.* [2].

Il peut s'agir plus particulièrement de diisocyanates ou de polyisocyanates de faible masse moléculaire, ou bien d'oligomères ou de polymères synthétiques de toute nature chimique, obtenus par polyaddition, polycondensation et/ou greffage, ou de polymères d'origine naturelle, éventuellement modifiés chimiquement, portant deux ou plus de deux fonctions isocyanate, soit aux extrémités de chaîne soit sur des groupes latéraux.

De préférence, le composé porteur d'au moins deux fonctions isocyanate libres est choisi parmi les composés diisocyanates et triisocyanates.

Les composés diisocyanates et triisocyanates peuvent être plus particulièrement choisis parmi :
- les diisocyanates aliphatiques, cycloaliphatiques et/ou aromatiques. Par exemple, à titre de composé diisocyanate aliphatique, peuvent être cités l'hexaméthylènediisocyanate (HDI), l'isophoronediisocyanate (IPDI), le bis(4-isocyanatocyclohexyl)méthane (« MDI hydrogéné », H₁₂MDI), le xylylène diisocyanate hydrogéné (H₆XDI) et le m-tétraméthylxylylène diisocyanate (TMXDI).

A titre de composé diisocyanates aromatiques, peuvent être cités le toluène diisocyanate (TDI), le diphénylméthane diisocyanate (MDI), le xylylène diisocyanate (XDI) et le paraphénylène diisocyanate (PPDI).
- les triisocyanates aliphatiques, cycloalipahtiques et/ou aromatiques, tels que :
- les triisocyanates obtenus par réaction entre un triol et un excès de diisocyanate, notamment ceux de formule 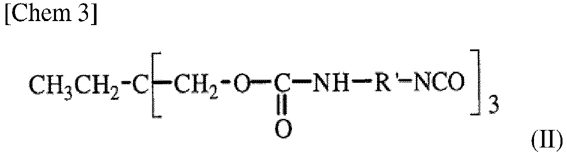
- les isocyanatobiurets de formule : 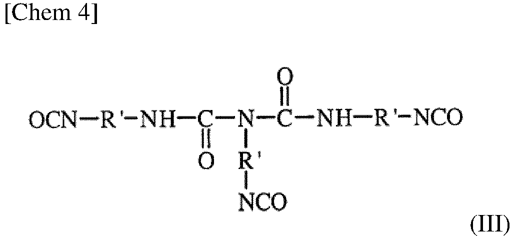
- les isocyanurates de formule : 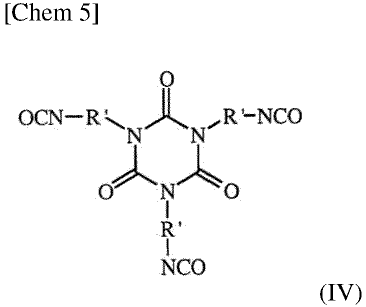
dans lesquelles R' représentent, indépendamment les uns des autres, un radical hydrocarboné linéaire, ramifié ou cyclique, comportant de 2 à 30 atomes de carbone, en particulier un alkylène comportant de 4 à 6 atomes de carbone.

De préférence, la molécule mise en oeuvre en étape (ii) est obtenue à partir d'un composé choisi parmi les diisocyanates aliphatiques ou aromatiques tels que décrits précédemment, par exemple le HDI, et les isocyanatobiurets de formule (III) tels que décrits précédemment. Selon une variante de réalisation, la molécule mise en oeuvre en étape (ii) est porteuse de deux fonctions isocyanates bloquées, en particulier de deux fonctions de type uréthane. Elle est obtenue de préférence à partir de l'hexaméthylène diisocyanate (HDI).

Selon une autre variante de réalisation, la molécule mise en oeuvre en étape (ii) est porteuse de trois fonctions isocyanates bloquées, en particulier de trois fonctions uréthane. Elle est obtenue de préférence à partir d'un isocyanatobiuret tel que décrit précédemment, par exemple le 1,3,5-tris(6-isocyanatohexyl)biuret.

La molécule porteuse d'au moins une fonction isocyanate bloquée, de préférence de deux ou trois fonctions isocyanate bloquées, notamment de fonctions uréthanes, peut être disponible dans le commerce.

Alternativement, elle peut être obtenue, préalablement à la mise en oeuvre du procédé de l'invention, par réaction entre un composé comportant au moins une fonction isocyanate, en particulier comprenant deux ou trois fonctions isocyanate, et un ou plusieurs agents de blocage appropriés.

Le procédé de l'invention, opéré en milieu CO₂ supercritique, peut comprendre plus particulièrement les étapes suivantes :
- placer le substrat à fonctionnaliser dans le réacteur (autoclave) ;
- charger le réacteur en fluide supercritique ;

Par exemple, le réacteur peut être chargé en dioxyde de carbone liquide, puis du dioxyde de carbone à l'état supercritique est généré en portant le réacteur à une température de 32 °C et à une pression de 70 bar.

Alternativement, dans le cas d'un réacteur industriel, du CO₂ à l'état supercritique peut être directement introduit dans le réacteur.
- introduire la ou lesdites molécules organiques porteuses d'au moins une fonction isocyanate bloquée, de préférence véhiculée dans le CO₂ supercritique, à une température strictement inférieure à la température d'activation de ladite fonction isocyanate bloquée ;
- augmenter la température du réacteur, pour atteindre une valeur supérieure ou égale à la température d'activation (ou déblocage) de ladite fonction isocyanate bloquée ;
le réacteur étant maintenu au cours de ces étapes dans des conditions de pression et de température dans le domaine supercritique du fluide mis en oeuvre, notamment dans le domaine supercritique du dioxyde de carbone.

Il appartient bien entendu à l'homme du métier d'ajuster la quantité en molécules mises en oeuvre selon l'invention, notamment au regard de la surface du substrat à fonctionnaliser et du taux de greffage souhaité.

Le taux de greffage de ladite molécule à la surface du substrat dépend notamment de l'encombrement stérique lié à la molécule greffée, qui empêche le greffage d'autres molécules.

Typiquement, de 5 à 50 %, en particulier de 5 à 25 %, plus particulièrement de 6 à 20 %, des fonctions à hydrogène labile, par exemple des fonctions hydroxyle, présentes à la surface du substrat, peuvent être greffées par ladite molécule.

L'homme du métier est à même de mettre en oeuvre un chauffage à une température suffisante pour permettre l'activation d'au moins une fonction isocyanate bloquée portée par la molécule. Le chauffage est ainsi opéré en étape (iii) à une température supérieure ou égale à la température d'activation de ladite fonction isocyanate bloquée.

Le chauffage en étape (iii) peut être opéré à une température comprise entre 75 °C et 120 °C, en particulier entre 80 °C et 100 °C.

Il est entendu que les températures mises en oeuvre selon le procédé de l'invention ne doivent pas venir dégrader le substrat.

De manière avantageuse, il est possible d'abaisser la température d'activation d'une fonction isocyanate bloquée donnée, par addition d'un catalyseur approprié.

Ainsi, selon une variante de réalisation, le procédé de l'invention peut comprendre l'addition, en sus d'au moins ladite molécule porteuse d'au moins une fonction isocyanate bloquée, d'un ou plusieurs catalyseurs.

Ces catalyseurs sont plus particulièrement aptes à activer la réactivité des fonctions de type hydroxyle et amine secondaire.

De tels catalyseurs peuvent être plus particulièrement choisis parmi les amines tertiaires tel que le 1,4-diazabicyclo[2,2,2]octane (DABCO), le 1-azabicyclo[2.2.2]octane (quinuclidine), le 1,8-Diazabicyclo[5.4.0]undec-7-ène (DBU, CAS : 6674-22-2), le 1,5-diazabicyclo[4.3.0]non-5-ène (DBN, CAS : 3001-72-7), le 3,3,6,9,9-pentaméthyl-2,10-diazabicyclo[4,4,0]déc-1-ène, le chlorure d'étain, les composés organométalliques tels que les acétonylacétates métalliques, les composés organométalliques de l'étain, l'hexanoate de calcium, le 2-éthylhexanoate de calcium, l'octanoate de calcium et le linoléate de calcium, le dilaurate de dibutylétain (DBTDL, CAS : 75-58-7), le tris(2-éthylhexanoate) de bismuth et le bis(2-éthylhexanoate) de zinc, les sulfonimides, tel que le bis(trifluorométhane)sulfonimide (TFMI, CAS : 82113-65-3), les acides sulfoniques, tel que l'acide trifluorométhanesulfonique (acide triflique), l'acide p-toluène sulfonique (PTSA, CAS : 104-15-4) et l'acide méthanesulfonique (MSA, CAS : 75-75-2), les dérivés phosphatés, tel que le diphénylphosphate (DPP, CAS : 838-85-7).

De préférence le catalyseur est choisi parmi le 1,4-diazabicyclo[2,2,2]octane (DABCO), le 1,8-diazabicyclo[5.4.0]undec-7-ène (DBU), le 1,5-diazabicyclo[4.3.0]non -5-ène (DBN), le dilaurate de dibutylétain (DBTDL), le bis(trifluorométhane), l'acide triflique, l'acide p-toluène sulfonique (PTSA), l'acide méthanesulfonique (MSA) et le diphénylphosphate (DPP).

Le ou lesdits catalyseurs peuvent être mis en oeuvre à raison de 0,1 % à 5 % massique, de préférence de 0,5 % à 1 % massique, par rapport à la masse de la ou desdites molécules porteuses d'au moins une fonction isocyanate bloquée.

Le fluide supercritique permettant avantageusement d'éliminer aisément les sous-produits et produits qui n'ont pas réagi, il est possible d'ajouter le catalyseur dans des quantités importantes, avantageusement en une quantité supérieure ou égale à 0,5 % massique, par rapport à la masse de la ou desdites molécules porteuses d'au moins une fonction isocyanate bloquée.

L'agent de blocage, BH, libéré lors de l'activation en étape (iii) de ladite fonction isocyanate, peut être éliminé du réacteur. Il peut être avantageusement recyclé, par exemple pour servir d'agent de blocage pour la préparation d'une molécule à fonctions isocyanates bloquées mise en oeuvre dans un procédé selon l'invention.

A l'issue de l'étape (iii) du procédé de l'invention, le substrat est pourvu en surface de ladite molécule, greffée de manière covalente à la surface du substrat, en particulier par l'intermédiaire d'une liaison covalente de type uréthane (-NH-C(O)O-), dans le cas où les fonctions à hydrogène labile du substrat sont des fonctions hydroxyles.

Le substrat ainsi fonctionnalisé en surface peut être récupéré à l'issue de l'étape (iii), le cas échéant après une ou plusieurs étape(s) de lavage dans le fluide supercritique, en particulier dans le CO₂ supercritique, puis dépressurisation du réacteur.

Le lavage peut être opéré par exemple en faisant circuler le fluide supercritique dans le réacteur.

L'étape qui consiste à dépressuriser le réacteur consiste plus précisément à dépressuriser jusqu'à la pression atmosphérique et à évacuer le dioxyde de carbone, de préférence sous forme de gaz. Elle est avantageusement réalisée à une température qui permet d'assurer la transition de phase CO₂ supercritique vers CO₂ gaz, en évitant la phase liquide du CO₂. Cette étape est donc avantageusement réalisée à une température comprise entre 45 et 85°C. Alternativement, comme détaillé dans la suite du texte, le procédé de l'invention peut comprendre, ultérieurement au greffage de ladite molécule à la surface du substrat, une ou plusieurs étapes subséquentes, destinées à modifier les autres fonctions isocyanates bloquées éventuellement présentes au niveau de la molécule greffée.

### VARIANTES DE FONCTIONNALISATION

Comme évoqué précédemment, la molécule mise en oeuvre en étape (ii) du procédé de l'invention peut porter, outre une ou plusieurs fonctions isocyanates bloquées, au moins un groupe d'intérêt, dont on veut tirer profit ultérieurement au greffage de ladite molécule à la surface du substrat.

Selon une variante de réalisation, la molécule peut porter une ou plusieurs fonctions isocyanates bloquées, de préférence une unique fonction isocyanate bloquée, et au moins un groupement à insaturation(s) éthylénique(s) polymérisable par voie radicalaire, de préférence un unique groupement à insaturation(s) éthylénique(s) polymérisable par voie radicalaire.

On entend par « groupement à insaturation(s) éthylénique(s) », un radical contenant au moins une fonction insaturée éthylénique polymérisable.

Le groupement à insaturation(s) éthylénique(s) peut être choisi par exemple parmi des groupements acrylate, méthacrylate, allylique et vinylique, de préférence parmi des groupements (méth)acrylates.

De telles molécules porteuses d'une fonction isocyanate bloquée et d'un groupement à insaturation(s) éthylénique(s) peuvent être obtenues par réaction entre un composé porteur d'une fonction isocyanate et d'un groupement à insaturation(s) éthylénique(s), de préférence une fonction (méth)acrylate, avec un agent de blocage approprié, par exemple de type oxime. A titre d'exemple, on peut citer les uréthanes issus de la réaction d'une oxime, par exemple la 2-butanone oxime avec le 2-isocyanatoéthyl méthacrylate ou le 3-isopropényl-α,α-diméthylbenzylisocyanate.

A l'issue du greffage de ladite molécule en étape (iii), la surface fonctionnalisée du substrat présente ainsi des groupements à insaturation(s) éthylénique(s), greffés de manière covalente à la surface du substrat et accessibles pour une polymérisation par voie radicalaire.

Ainsi, dans le cadre de cette variante de réalisation, le procédé peut comprendre, ultérieurement au greffage de ladite molécule à la surface du substrat, une étape de polymérisation radicalaire, activée chimiquement ou par irradiation, à partir de monomères polymérisables par voie radicalaire, en particulier de monomères à insaturation(s) éthylénique(s), par exemple des monomères di(méth)acrylates.

Avantageusement, la polymérisation radicalaire peut être opérée en milieu CO₂ supercritique, en particulier au sein du réacteur ayant servi à la fonctionnalisation du substrat, sans retirer le substrat fonctionnalisé du réacteur.

La polymérisation radicalaire peut être activée en présence d'un initiateur de radicaux libres, par exemple de type azo ou peroxo, tel que l'azo-bis-isobutyronitrile (AIBN).

Selon une autre variante de réalisation, la molécule mise oeuvre selon l'invention peut porter au moins deux fonctions isocyanates bloquées, de préférence deux ou trois fonctions isocyanates bloquées, ladite molécule étant plus particulièrement dérivée d'un composé diisocyanate ou triisocyanate tel que décrit précédemment.

De manière avantageuse, ladite molécule peut porter aux moins deux fonctions isocyanates bloquées distinctes, de préférence de type uréthane et/ou urée. En particulier, la molécule mise en oeuvre selon l'invention peut porter, outre une première fonction isocyanate bloquée, par exemple de type uréthane ou urée, apte à être activée par chauffage en étape (iii), une ou plusieurs fonctions isocyanates bloquées, par exemple de type uréthane ou urée, distincte(s) de ladite première fonction isocyanate bloquée, non activable(s) dans les conditions du chauffage mises en oeuvre en étape (iii).

En d'autres termes, la molécule mise en oeuvre en étape (ii) du procédé de l'invention peut porter :
- une première fonction isocyanate bloquée, de préférence une fonction urée ou uréthane, notée F1, présentant une température d'activation donnée T1 ; et
- au moins une, en particulier une ou deux fonction(s) isocyanate(s) bloquée(s), distinctes de ladite première fonction isocyanate bloquée, de préférence de type uréthane ou urée, notée(s) F2, non activable(s) dans les conditions du chauffage mises en oeuvre en étape (iii) pour débloquer ladite fonction F1, en particulier non activable(s) à une température T1.

La ou lesdites fonctions isocyanates bloquées F2 peuvent être thermolabiles ou non. Dans le cas où la ou lesdites fonctions isocyanates bloquées F2 sont thermolabiles, elles sont susceptibles d'être activées par chauffage à une température supérieure ou égale à une température d'activation T2, T2 étant strictement supérieure à T1.

La différence de réactivité, autrement dit les températures d'activation, des fonctions isocyanates bloquées peut être contrôlée *via* la mise en oeuvre d'agents de blocage de différentes natures.

Ainsi, une molécule comportant au moins deux fonctions isocyanates bloquées distinctes, F1 et F2, peut être obtenue par réaction entre un composé comportant au moins deux fonctions isocyanate, de préférence deux ou trois fonctions isocyanate, en particulier un composé diisocyanate ou triisocyanate tel que décrit précédemment, et au moins deux agents de blocage distincts BH tels que définis précédemment.

Le chauffage en étape (iii) est avantageusement opéré à une température supérieure ou égale à T1 et, dans le cas où la ou les fonctions F2 sont thermolabiles, strictement inférieure à T2, pour provoquer le déblocage de ladite fonction isocyanate bloquée F1 et le greffage covalent de ladite molécule par réaction de ladite fonction isocyanate avec une fonction à hydrogène labile en surface du substrat.

De manière avantageuse, le substrat à l'issue de l'étape (iii) peut être ainsi fonctionnalisé en surface par un ou plusieurs fonctions isocyanates bloquées, par exemple de type uréthane, liées de manière covalente au substrat, par l'intermédiaire de la liaison covalente, par exemple de type uréthane, formée à l'issue de la réaction entre une fonction isocyanate, issue de la fonction isocyanate bloquée F1, et une fonction à hydrogène labile portée par le substrat, sans débloquer la ou lesdites fonctions isocyanates bloquées F2.

La ou les fonctions isocyanates bloquées, présentes en surface du substrat obtenu à l'issue de l'étape (iii), peuvent comporter un groupe d'intérêt, ou être ultérieurement activées et transformées via leur interaction avec un composé porteur d'une fonction à hydrogène labile, en groupes d'intérêt, de manière à obtenir la fonctionnalisation souhaitée en surface du substrat.

De manière avantageuse, la mise en oeuvre d'une molécule comportant au moins deux fonctions isocyanates bloquées, de préférence de type uréthane ou urée, F2, non activées à l'issue du greffage en étape (iii) de ladite molécule en surface du substrat, permet d'accroître le taux de greffage (taux de recouvrement) de la surface du substrat, autrement dit la quantité de greffage en groupes d'intérêt par site disponible à la surface du substrat.

Selon une première variante de réalisation, comme illustré en exemple 2, la ou lesdites fonctions isocyanates bloquées, F2, par exemple de type uréthane ou urée, non activables dans les conditions de chauffage mises en oeuvre en étape (iii), comportent au moins un groupe d'intérêt R_{f}. La fonction isocyanate bloquée peut être par exemple de formule -NH-C(=O)-B, avec B étant tel que défini précédemment, B étant porteur d'au moins un groupe d'intérêt R_{f}.

Dans le cadre de cette variante de réalisation, la ou lesdites fonctions isocyanates bloquées F2 sont de préférence des fonctions non thermolabiles, autrement dit ne pouvant pas générer de fonctions isocyanates par chauffage dans le domaine de stabilité thermique du substrat à fonctionnaliser.

Dans le cas où la ou lesdites fonctions isocyanates bloquées F2 sont thermolabiles, elles présentent une température d'activation, T2, strictement supérieure à T1.

De préférence, la différence entre les températures d'activation respectives desdits fonctions isocyanates bloquées F1 et F2, T2-T1, est d'au moins 20 °C, de préférence de 30 °C à 60 °C. Un tel écart permet d'éviter tout risque d'activation de la ou desdites fonctions isocyanates bloquées F2 lors du greffage en étape (iii) de la molécule.

A l'issue de l'étape (iii), la surface du substrat présente ainsi avantageusement des groupes d'intérêt, greffés de manière covalente, par l'intermédiaire de la molécule, à la surface du substrat.

Le substrat dont la surface est fonctionnalisée par les groupes d'intérêt R_{f} peut être récupéré dans une étape (iv) ultérieure à l'étape (iii), le cas échéant après une ou plusieurs étapes de lavage dans le fluide supercritique, comme décrit précédemment.

Selon une variante de réalisation, ladite molécule mise en oeuvre en étape (ii) du procédé de l'invention porte, outre une première fonction isocyanate bloquée, de préférence une fonction uréthane, notée F1, susceptible d'être activée par chauffage à une température supérieure ou égale à une température donnée, dite température d'activation, notée T1, au moins une, en particulier une ou deux fonction(s) isocyanate(s) bloquée(s), de préférence de type uréthane, notée(s) F2, susceptible(s) d'être activée(s) par chauffage à une température supérieure ou égale à une température d'activation T2, T2 étant strictement supérieure à T1. Comme décrit précédemment, la différence entre les températures d'activation respectives desdits fonctions isocyanates bloquées F1 et F2, T2-T1, est de préférence d'au moins 30°C, de préférence de 40 °C à 60 °C. La ou les fonctions isocyanates bloquées, F2, en particulier de type uréthane, peuvent être ultérieurement activées, pour obtenir le greffage par les groupes d'intérêt souhaités.

Dans le cadre de cette variante, le procédé de l'invention peut comprendre au moins les étapes suivantes :
(i) disposer d'un substrat présentant en surface des fonctions à hydrogène labile ;
(ii) mettre en présence, dans le CO₂ supercritique, ledit substrat avec au moins une molécule organique, porteuse d'une fonction isocyanate bloquée, F1, susceptible d'être activée par chauffage à une température supérieure ou égale à T1, et d'au moins une fonction isocyanate bloquée, F2, susceptible d'être activée par chauffage à une température supérieure ou égale à T2, T2 étant strictement supérieure à T1 ;
(iii) soumettre l'ensemble à une température supérieure ou égale à T1 et strictement inférieure à T2, pour provoquer le déblocage de ladite fonction isocyanate bloquée F1 et le greffage covalent de ladite molécule par réaction de ladite fonction isocyanate avec une fonction à hydrogène labile en surface du substrat ;
(iv') soumettre le substrat obtenu à l'issue de l'étape (iii) à une température supérieure ou égale à T2, pour provoquer le déblocage de la ou desdites fonctions isocyanates bloquées F2 ;
(v') mettre en présence, dans le CO₂ supercritique, ledit substrat obtenu à l'issue de l'étape (iv') présentant des fonctions isocyanates libres en surface, avec au moins un composé porteur d'au moins une fonction à hydrogène labile, dans des conditions propices à l'interaction entre la fonction à hydrogène labile portée par ledit composé et une fonction isocyanate en surface du substrat ; et
(vi') récupérer ledit substrat.

De manière avantageuse, l'ensemble des étapes (i) à (v') du procédé peut être réalisé au sein du même réacteur dans le CO₂ supercritique.

Une telle variante est par exemple illustrée dans les exemples 1 et 3 qui suivent.

Le composé porteur d'au moins une fonction à hydrogène labile peut être de diverses natures, pour autant qu'il présente une fonction à hydrogène labile, apte à interagir avec une fonction isocyanate libre de surface. Il peut être par exemple choisi parmi les amines primaires et secondaires, les alcools, les silanols (aliphatiques, aromatiques, fluorés ou perfluorés), les acides carboxyliques et de petits oligomères portant ces fonctions, et une molécule d'eau.

En particulier, le composé porteur d'au moins une fonction à hydrogène labile est de l'eau, apte à interagir avec les fonctions isocyanates pour former des fonctions amines greffées de manière covalente à la surface du substrat.

Selon un mode de réalisation particulier, le composé porteur d'au moins une fonction à hydrogène labile peut porter en outre au moins un groupe d'intérêt, R_{f}. La réaction en étape (v') entre ledit composé et lesdites fonctions isocyanates libres greffées en surface du substrat à l'issue de l'étape (iv') conduit ainsi avantageusement au greffage covalent des groupes d'intérêt R_{f} en surface du substrat.

Alternativement, les fonctions isocyanates activées F2 peuvent être transformées en groupes d'intérêt. A titre d'exemple, la réaction entre une fonction isocyanate active avec une molécule d'eau résulte en la formation d'une fonction amine, greffée de manière covalente à la surface du substrat par l'intermédiaire de ladite molécule greffée.

Un tel substrat, fonctionnalisé en surface par des fonctions amines, peut trouver des applications intéressantes, par exemple pour le piégeage de composés organiques volatils (COV) de type aldéhyde, par exemple du formaldéhyde ou de l'acétaldéhyde.

L'homme du métier est à même d'ajuster les conditions opératoires pour la mise en oeuvre en étape (v') de la réaction entre une fonction isocyanate libre en surface du substrat et une fonction à hydrogène labile. En particulier, la réaction peut être opérée en présence d'un ou plusieurs catalyseurs, comme par exemple le DABCO, pour la réaction entre une fonction hydroxyle et une fonction isocyanate.

L'invention va maintenant être décrite au moyen des exemples suivants, donnés bien entendu à titre illustratif et non limitatif de l'invention.

### Exemple

### Exemple 1

### Fonctionnalisation avec un composé diisocyanate aliphatique porteur de deux fonctions présentant des températures d'activation distinctes

Préparation du composé porteur de deux fonctions isocyanate bloquées

Le composé porteur de deux fonctions isocyanate bloquées est obtenu par réaction entre l'hexaméthylène diisocyanate (HDI), porteur de deux fonctions isocyanates libres, et deux agents de blocage distincts, la 2-butanone-oxime (représenté RiOH) et le caprolactame (représenté R'R"N-H).

La réaction entre les fonctions isocyanates et les agents de blocage est opérée en présence d'un catalyseur, tel que le DABCO.

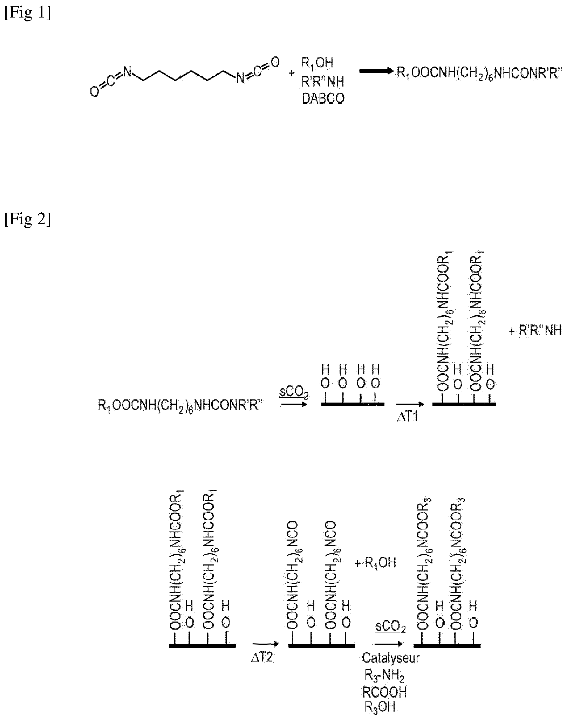

La réaction de blocage des deux fonctions isocyanates du HDI est représentée schématiquement en figure 1.

Les fonctions isocyanates bloquées -NH-C(=O)NR'R" et -NH-C(=O)O-Ri, présentant des températures d'activation (de déblocage) respectivement de 90 °C (T1) et 120 °C (T2).

### Fonctionnalisation en surface

Les différentes étapes mises en oeuvre pour la fonctionnalisation du substrat sont représentées schématiquement en figure 2.

### Etape 1

Le substrat, présentant en surface des fonctions à hydrogène labile (par exemple, comprenant des fibres de cellulose et/ou fibres de verres), est introduit dans un réacteur approprié pour travailler avec du CO₂ à l'état supercritique, de volume 1 litre.

Le réacteur est fermé, chargé avec du CO₂ liquide, puis chauffé à 80°C pour passer dans le domaine supercritique du CO₂ (80°C ; 300 bar).

Alternativement, le réacteur peut être un réacteur industriel chargé directement par du CO₂ à l'état supercritique.

Le composé dérivé du HDI, porteur de deux fonctions isocyanates bloquées, préparé comme décrit précédemment, est introduit dans le réacteur.

La température est élevée à une valeur de 100 °C, permettant l'activation des fonctions isocyanates bloquées -NH-C(=O)NR'R", et l'interaction des fonctions isocyanates ainsi formées avec les fonctions hydroxyles de surface.

Dans un réacteur industriel, les molécules n' ayant pas réagi et les sous-produits de la réaction (caprolactame) peuvent être transportées dans le CO₂ supercritique, et éventuellement récupérées, par exemple au niveau d'un séparateur, et recyclées, par exemple pour servir d'agent de blocage pour la préparation de composé à fonctions isocyanates bloquées.

A l'issue de ce traitement, le substrat présente en surface des fonctions isocyanates bloquées -NH-C(=O)O-Ri, n'ayant pas été activées, greffées de manière covalente à la surface du substrat par l'intermédiaire de fonctions uréthane formées par réaction entre les hydroxyles de surface et les fonctions isocyanates activées issues du déblocage des fonctions -NH-C(=O)NR'R".

### Etape 2

La température du réacteur est ensuite portée à une valeur de 120 °C, pour permettre l'activation des fonctions isocyanates bloquées -NH-C(=O)O-Ri.

### Etape 3

Les fonctions isocyanates activées peuvent servir au greffage du groupement R₃, avec R₃ représentant un groupe d'intérêt (par exemple un molécule à haute valeur ajoutée), en introduisant dans le réacteur dans le CO₂ supercritique , un mélange de Rs-OH, R₃-NH₂ et R₃-COOH et de catalyseur (DABCO), comme représenté en figure 2.

### Exemple 2

### Fonctionnalisation avec un composé triuréthane aliphatique porteur d'une unique fonction uréthane labile

### Préparation du composé triuréthane porteur d'une unique fonction uréthane labile

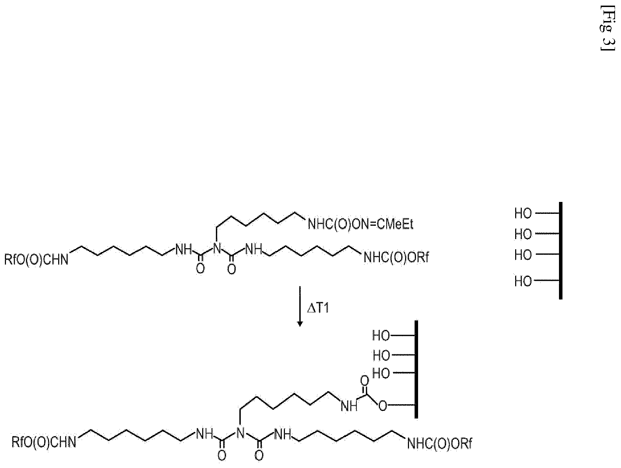

Le composé porteur de trois fonctions isocyanate bloquées (fonction uréthane) est obtenu par réaction entre le 1,3,5-tris-6-(isocyanatohexyl)biuret, R_{f}-OH (R_{f} étant le groupe fonctionnel d'intérêt, et le MEKO (Méthyléthyl cétone oxime, C₂H₅C(NOH)CH₃, dans des proportions ajustées pour obtenir un composé porteur de deux fonctions uréthane - NHC(O)OR_{f} non labiles et d'une fonction uréthane labile -NHC(O)O-N=C(CH₃)CH₂CH₃, comme représenté schématiquement en figure 3.

### Fonctionnalisation en surface du substrat

La fonctionnalisation du substrat par le composé triuréthane est opérée dans des conditions similaires à celles de l'exemple 1, dans un réacteur chargé avec du CO₂ à l'état supercritique. Le composé porteur d'une unique fonction uréthane labile est introduit dans le réacteur.

La température est élevée à une valeur T1 de 100 °C, permettant l'activation de la fonction isocyanate bloquée -NHC(O)O-N=C(CH₃)CH₂CH₃, et l'interaction de la fonction isocyanate ainsi libérée avec les fonctions hydroxyles de surface, pour former une liaison covalente uréthane, comme représenté schématiquement en figure 3.

A l'issue du greffage, chacun des sites de la surface du substrat (hydrogène labile) ayant réagi avec ledit composé triuréthane, est porteur de deux groupements fonctionnels d'intérêt R_{f}.

La mise en oeuvre d'un composé porteur d'au moins trois, voire plus, fonctions isocyanates bloquées, dont une seule étant labile dans les conditions de greffage, permet avantageusement d'accroître le taux de greffage en groupements d'intérêt à la surface du substrat.

### Exemple 3

### Fonctionnalisation avec un composé trifonctionnel aliphatique

### Préparation du composé trifonctionnel porteur de fonctions urée et uréthane labiles distinctes

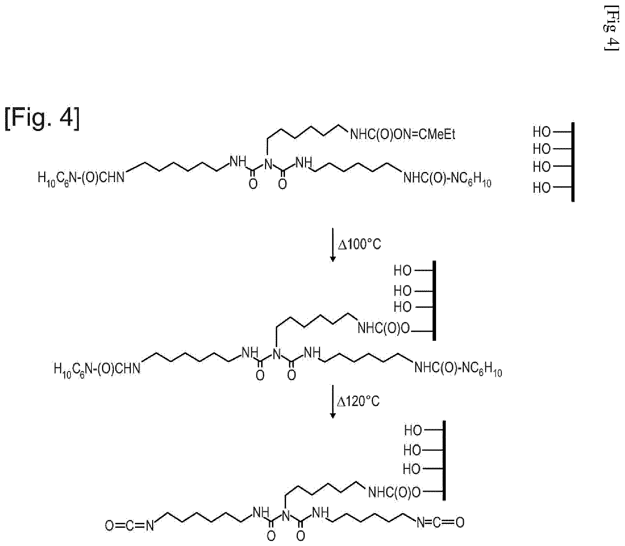

Le composé porteur de trois fonctions isocyanate bloquées (fonctions urée et uréthane) est obtenu par réaction entre le 1,3,5-tris-6-isocyanatohexyl)biuret, le MEKO (Méthyléthyl cétone oxime, C₂H₅C(NOH)CH₃ et le caprolactame (C₆H₁₁NO), dans des proportions ajustées pour obtenir un composé trifonctionnel porteur d'une fonction isocyanate bloquée de type -NHC(O)O-N=C(CH₃)CH₂CH₃, et deux fonctions isocyanates bloquées de type - NHC(O)-NC₆H₁₀, comme représenté schématiquement en figure 4.

### Fonctionnalisation en surface du substrat

### Etape 1

La fonctionnalisation du substrat par le composé trifonctionnel est opérée dans des conditions similaires à celles de l'exemple 1, dans un réacteur chargé avec du CO₂ à l'état supercritique.

Le composé trifonctionnel est introduit dans le réacteur.

La température est élevée à une valeur de 100 °C (T1), permettant l'activation de la fonction isocyanate bloquée -NHC(O)O-N=C(CH₃)CH₂CH₃, et l'interaction de la fonction isocyanate ainsi libérée avec les fonctions hydroxyles de surface, pour former une liaison covalente uréthane, comme représenté schématiquement en figure 4. Les autres fonctions isocyanates bloquées (fonctions urée -NHC(O)-NC₆H₁₀) ne sont pas actives à une température de 100°C.

### Etape 2

La température du réacteur est ensuite portée à une valeur de 120°C (T2), pour permettre l'activation des fonctions isocyanates restantes (déblocage des fonctions bloquées avec le caprolactame).

Celles-ci pourront le cas échéant être mises en oeuvre pour réagir avec d'autres molécules porteuses d'au moins une fonction à hydrogène labile.

### Liste des documents cités

[1] Delebeck et al., Chemical reviews, 2013, 113, pp.80-118.
[2] Rolph et al., Polymer Chemistry, 2016, 7, pp. 7351-7364.

## Revendications

1. Procédé de fonctionnalisation de la surface d'un substrat, opéré dans un milieu fluide supercritique, mettant en oeuvre au moins les étapes consistant en :
(i) disposer d'un substrat présentant en surface des fonctions à hydrogène labile ;
(ii) mettre en présence, dans le CO₂ supercritique, ledit substrat avec au moins une molécule organique, porteuse d'au moins une fonction isocyanate bloquée, susceptible d'être activée par chauffage ; et
(iii) soumettre l'ensemble à une température suffisante pour provoquer le déblocage de ladite fonction isocyanate bloquée portée par la molécule, et le greffage covalent de ladite molécule par réaction de ladite fonction isocyanate avec une fonction à hydrogène labile en surface du substrat.

2. Procédé selon la revendication précédente, dans lequel les fonctions à hydrogène labile, portées par ledit substrat, sont choisies parmi des fonctions hydroxyle, amine primaire, amine secondaire et acide carboxylique, de préférence sont des fonctions hydroxyle.

3. Procédé selon l'une quelconque des revendications précédentes, dans lequel ledit substrat est choisi parmi des matrices polymériques organiques, en particulier en fibres de cellulose, tel que le coton et le papier, en bois, en polyméthylméthacrylate, en éthylèneacétate de vinyle, en polyacétate de vinyle partiellement ou totalement hydrolysé, en polyamide(s) tel que le polyamide 6, le polyamide 6-6, le polyamide 11 et le polyamide 12 ; lesdites matrices incorporant éventuellement une ou plusieurs charges inorganiques, telles que des fibres ou billes de verre, de la silice, des argiles, l'hydroxyde d'aluminium, l'aluminium oxyhydroxyde et le talc ; et les substrats inorganiques, tels que des substrats en fibres de verre ou en silice.

4. Procédé selon l'une quelconque des revendications précédentes, dans lequel ladite fonction isocyanate bloquée est de formule -NH-C(=O)-B, dans laquelle B représente un radical dérivé d'un agent de blocage BH choisi parmi les composés organiques comportant un ou plusieurs, de préférence un seul atome d'hydrogène labile.

5. Procédé selon la revendication précédente, dans lequel ledit agent de blocage BH est choisi parmi les alcools, les phénols, les amides, en particulier les amides cycliques tel que le caprolactame, les oximes, par exemple la méthyléthylcétone-oxime ou la 2-butanone oxime, les composés β-dicarbonyle, les pyrazoles, les esters d'acide hydroxycinnamique et d'alcools en C₁₋₆ ; les triazoles, les imidazolines, les tétrahydropyrimidines, et les imidazoles.

6. Procédé selon l'une quelconque des revendications précédentes, dans lequel ladite fonction isocyanate bloquée est une fonction uréthane, en particulier de formule -NH-C(=O)-B, avec B représentant
un radical -OR, avec R représentant groupement alkyle linéaire ou ramifié en C₁ à C₆, en particulier en C₂ à C₄ ; ou
un radical -O-N=CR¹R², avec R¹ et R² représentant, indépendamment l'un de l'autre, un atome d'hydrogène ou un groupe alkyle linéaire ou ramifié en C₁ à C₆, de préférence des groupes alkyles en C₁ à C_{4 ;} ou
un radical -NR'R" avec R' et R" formant ensemble avec l'atome d'azote qui les portent un groupe cyclique lactame.

7. Procédé selon l'une quelconque des revendications précédentes, dans lequel l'étape (iii) comprend un chauffage à une température comprise entre 75 °C et 120 °C, en particulier entre 80 °C et 100 °C.

8. Procédé selon l'une quelconque des revendications précédentes, dans lequel ladite molécule porte, outre une fonction isocyanate bloquée, au moins un groupement à insaturation(s) éthylénique(s) polymérisable par voie radicalaire, par exemple choisi parmi des groupements (méth)acrylates, ledit procédé pouvant comprendre, ultérieurement à l'étape (iii), une étape de polymérisation radicalaire, activée chimiquement ou par irradiation, à partir de monomères polymérisables par voie radicalaire, en particulier de monomères à insaturation(s) éthylénique(s), par exemple des monomères di(méth)acrylates.

9. Procédé selon l'une quelconque des revendications précédentes, dans lequel ladite molécule porte au moins deux fonctions isocyanates bloquées distinctes, de préférence au moins deux fonctions uréthane distinctes, ladite molécule étant plus particulièrement obtenue par réaction entre au moins deux agents de blocage distincts BH tels que définis selon l'une quelconque des revendications 4 à 6, et un composé comportant au moins deux fonctions isocyanate, de préférence comportant deux ou trois fonctions isocyanate.

10. Procédé selon la revendication précédente, dans lequel ledit composé comportant au moins deux fonctions isocyanate est choisi parmi des composés diisocyanates et triisocyanates, en particulier parmi les diisocyanates aliphatiques tels que l'hexaméthylènediisocyanate, l'isophoronediisocyanate, le bis(4-isocyanatocyclohexyl)méthane H12MDI), le xylylène diisocyanate hydrogéné et le m-tétraméthylxylylène diisocyanate ; les diisocyanates aromatiques tels que le toluène diisocyanate , le diphénylméthane diisocyanate , le xylylène diisocyanate et le paraphénylène diisocyanate ; les triisocyanates aliphatiques, cycloaliphatiques et/ou aromatiques, tels que les isocyanatobiurets de formule 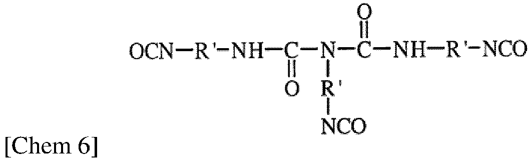 dans laquelle R' représentent, indépendamment les uns des autres, un radical hydrocarboné linéaire, ramifié ou cyclique, comportant de 2 à 30 atomes de carbone.

11. Procédé selon l'une quelconque des revendications précédentes, dans lequel ladite molécule mise en oeuvre en étape (ii) porte :
- une première fonction isocyanate bloquée, de préférence une fonction urée ou uréthane, notée F1, susceptible d'être activée par chauffage à une température supérieure ou égale à une température donnée, dite température d'activation, notée T1 ; et
- au moins une, en particulier une ou deux fonction(s) isocyanate(s) bloquée(s), de préférence de type uréthane ou urée, notée(s) F2, éventuellement susceptible(s) d'être activée(s) à une température supérieure ou égale à une température d'activation T2, T2 étant strictement supérieure à T1,
ledit procédé comprenant en étape (iii) un chauffage à une température supérieure ou égale à T1 et, le cas échéant, strictement inférieure à T2, pour provoquer le déblocage de ladite fonction isocyanate bloquée F1 et le greffage covalent de ladite molécule par réaction de ladite fonction isocyanate avec une fonction à hydrogène labile en surface du substrat.

12. Procédé selon la revendication précédente, dans lequel la ou lesdites fonction(s) isocyanate(s) bloquée(s) F2 sont des fonctions, de préférence non thermolabiles, porteuses d'au moins un groupe, noté R_{f}, ayant des propriétés d'intérêt, ledit procédé comprenant, ultérieurement à l'étape (iii), une étape (iv) consistant à récupérer ledit substrat dont la surface est fonctionnalisée par lesdits groupements R_{f}.

13. Procédé selon la revendication 11, dans lequel la ou lesdites fonction(s) isocyanate(s) bloquée(s) F2, de préférence de type uréthane, présentent une température d'activation T2 strictement supérieure à T1, ledit procédé comprenant, ultérieurement à l'étape (iii), au moins les étapes consistant en :
(iv') soumettre le substrat obtenu à l'issue de l'étape (iii) à une température supérieure ou égale à T2, pour provoquer le déblocage de la ou desdites fonctions isocyanates bloquées F2 ;
(v') mettre en présence, dans le CO₂ supercritique, ledit substrat obtenu à l'issue de l'étape (iv') avec au moins un composé porteur d'au moins une fonction à hydrogène labile, dans des conditions propices à l'interaction entre la fonction à hydrogène labile porté par ledit composé et une fonction isocyanate en surface du substrat ; et
(vi') récupérer ledit substrat.

14. Procédé selon la revendication 13, dans lequel la différence entre les températures d'activation respectives desdits fonctions isocyanates bloquées F1 et F2, T2-T1, est d'au moins 20 °C, de préférence de 30 °C à 60 °C.

15. Procédé selon la revendication 13 ou 14, dans lequel ledit composé porteur d'au moins une fonction à hydrogène labile est de l'eau, apte à interagir avec les fonctions isocyanates pour former des fonctions amines greffées de manière covalente à la surface du substrat.

## Patentansprüche

1. Verfahren zur Funktionalisierung der Oberfläche eines Substrats, das in einem überkritischen flüssigen Medium betrieben wird, wobei zumindest die folgenden Schritte durchgeführt werden, die aus Folgendem bestehen:
(i) dem Anordnen eines Substrats, das auf der Oberfläche labile Wasserstofffunktionen aufweist;
(ii) dem In-Kontakt-Bringen des Substrats mit mindestens einem organischen Molekül, das mindestens eine durch Erwärmen aktivierbare blockierte Isocyanatfunktion trägt, in überkritischem CO₂; und
(iii) dem Einwirkenlassen einer Temperatur auf das Ganze, die ausreichend ist, um das Entblockieren der vom Molekül getragenen blockierten Isocyanatfunktion und das kovalente Pfropfen des Moleküls durch eine Reaktion der Isocyanatfunktion mit einer labilen Wasserstofffunktion auf der Substratoberfläche zu bewirken.

2. Verfahren nach dem vorhergehenden Anspruch, wobei die vom Substrat getragenen labilen Wasserstofffunktionen aus Hydroxyl-, primären Amin-, sekundären Amin- und Carbonsäurefunktionen ausgewählt sind, vorzugsweise Hydroxylfunktionen sind.

3. Verfahren nach einem der vorhergehenden Ansprüche, wobei das Substrat aus organischen polymeren Matrices, insbesondere aus Cellulosefasern, wie Baumwolle und Papier, aus Holz, aus Polymethylmethacrylat, aus EthylenVinylacetat, aus teilweise oder vollständig hydrolysiertem Polyvinylacetat, aus (einem) Polyamid(en) wie Polyamid 6, Polyamid 6-6, Polyamid 11 und Polyamid 12 ausgewählt ist; wobei die Matrices gegebenenfalls ein oder mehrere anorganische Füllmittel, wie Glasfasern oder -kügelchen, Siliciumdioxid, Tone, Aluminiumhydroxid, Aluminiumoxyhydroxid und Talk; und anorganische Substrate, wie Glasfaser- oder Siliciumdioxid-Substrate, enthalten.

4. Verfahren nach einem der vorhergehenden Ansprüche, wobei die blockierte Isocyanatfunktion die Formel -NH-C(=O)-B aufweist, wobei B einen Rest darstellt, der von einem Blockierungsmittel BH stammt, das aus organischen Verbindungen ausgewählt ist, die ein oder mehrere, vorzugsweise ein einzelnes labiles Wasserstoffatom umfassen.

5. Verfahren nach dem vorhergehenden Anspruch, wobei das Blockierungsmittel BH aus Alkoholen, Phenolen, Amiden, insbesondere cyclischen Amiden wie Caprolactam, Oximen, beispielsweise Methylethylketonoxim oder 2-Butanonoxim, β-Dicarbonylverbindungen, Pyrazolen, Hydroxyzimtsäureestern und C₁₋₆-Alkoholen; Triazolen, Imidazolinen, Tetrahydropyrimidinen und Imidazolen ausgewählt ist.

6. Verfahren nach einem der vorhergehenden Ansprüche, wobei die blockierte Isocyanatfunktion eine Urethanfunktion, insbesondere mit der Formel -NH-C(=O)-B, ist, wobei B Folgendes darstellt:
einen -OR Rest, wobei R eine lineare oder verzweigte C₁- bis C₆-, insbesondere C₁- bis C₄-Alkylgruppe darstellt; oder
einen -O-N=CR¹R² Rest, wobei R¹ und R² unabhängig voneinander ein Wasserstoffatom oder eine lineare oder verzweigte C₁- bis C₆-Alkylgruppe, vorzugsweise C₁- bis C₄-Alkylgruppen, darstellen; oder
einen -NR'R" Rest, wobei R' und R" zusammen mit dem Stickstoffatom, das sie trägt, eine cyclische Lactamgruppe bilden.

7. Verfahren nach einem der vorhergehenden Ansprüche, wobei Schritt (iii) ein Erwärmen auf eine Temperatur zwischen 75 °C und 120 °C, insbesondere zwischen 80 °C und 100 °C, umfasst.

8. Verfahren nach einem der vorhergehenden Ansprüche, wobei das Molekül außer einer blockierten Isocyanatfunktion mindestens eine radikalisch polymerisierbare ethylenisch ungesättigte Gruppe trägt, die beispielsweise aus (Meth)Acrylat-Gruppen ausgewählt ist, wobei das Verfahren nach Schritt (iii) einen chemisch oder durch Bestrahlung aktivierten radikalischen Polymerisationsschritt ausgehend von radikalisch polymerisierbaren Monomeren, insbesondere ethylenisch ungesättigten Monomeren, beispielsweise Di(meth)acrylat-Monomeren, umfassen kann.

9. Verfahren nach einem der vorhergehenden Ansprüche, wobei das Molekül mindestens zwei getrennte blockierte Isocyanatfunktionen, vorzugsweise mindestens zwei getrennte Urethanfunktionen, trägt, wobei das Molekül insbesondere durch eine Umsetzung zwischen mindestens zwei getrennten Blockierungsmitteln BH gemäß der Definition in einem der Ansprüche 4 bis 6 und einer Verbindung erhalten wird, die mindestens zwei Isocyanatfunktionen umfasst, vorzugsweise zwei oder drei Isocyanatfunktionen umfasst.

10. Verfahren nach dem vorhergehenden Anspruch, wobei die mindestens zwei Isocyanatfunktionen umfassende Verbindung aus Diisocyanat- und Triisocyanat-Verbindungen, insbesondere aus aliphatischen Diisocyanaten wie Hexamethylendiisocyanat, Isophorondiisocyanat, Bis(4-isocyanatocyclohexyl)methan (H12MDI), hydriertem Xylylendiisocyanat und m-Tetramethylxylylendiisocyanat, aromatischen Diisocyanaten wie Toluoldiisocyanat, Diphenylmethandiisocyanat, Xylylendiisocyanat und Paraphenylendiisocyanat; aliphatischen, cycloaliphatischen und/oder aromatischen Triisocyanaten, wie Isocyanatobiurets der Formel 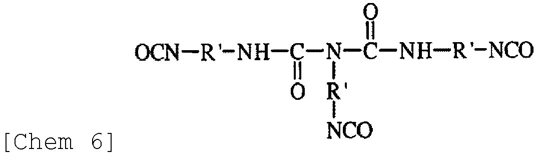 ausgewählt ist, wobei die R' unabhängig voneinander einen linearen, verzweigten oder cyclischen Kohlenwasserstoffrest darstellen, der 2 bis 30 Kohlenstoffe umfasst.

11. Verfahren nach einem der vorhergehenden Ansprüche, wobei das in Schritt (ii) verwendete Molekül Folgendes trägt:
- eine als F1 bezeichnete erste blockierte Isocyanatfunktion, vorzugsweise eine Harnstoff- oder Urethanfunktion, die durch Erwärmen auf eine Temperatur aktivierbar ist, die höher als oder gleich einer als Aktivierungstemperatur bezeichneten gegebenen Temperatur ist, die als T1 bezeichnet wird; und
- mindestens eine, insbesondere eine oder zwei als F2 bezeichnete blockierte Isocyanatfunktionen vorzugsweise vom Urethan- oder Harnstofftyp, die gegebenenfalls bei einer Temperatur aktivierbar ist (sind), die höher als oder gleich einer Aktivierungstemperatur T2 ist, wobei T2 strickt höher als T1 ist,
wobei das Verfahren in Schritt (iii) ein Erwärmen auf eine Temperatur umfasst, die höher oder gleich T1 und gegebenenfalls strickt niedriger als T2 ist, um das Entblockieren der blockierten Isocyanatfunktion F1 und das kovalente Pfropfen des Moleküls durch eine Reaktion der Isocyanatfunktion mit einer labilen Wasserstofffunktion auf der Substratoberfläche zu bewirken.

12. Verfahren nach dem vorhergehenden Anspruch, wobei es sich bei der oder den blockierten Isocyanatfunktionen F2 um vorzugsweise nicht thermolabile Funktionen handelt, die mindestens eine als R_{f} bezeichnete Gruppe mit interessierenden Eigenschaften trägt, wobei das Verfahren nach Schritt (iii) einen Schritt (iv) umfasst, der aus der Isolation des Substrats besteht, dessen Oberfläche durch die R_{f}-Gruppen funktionalisiert ist.

13. Verfahren nach Anspruch 11, wobei die blockierte(n) Isocyanatfunktion(en) F2, vorzugsweise vom Urethantyp, eine Aktivierungstemperatur T2 aufweist (aufweisen), die strickt höher als T1 ist, wobei das Verfahren nach Schritt (iii) zumindest die Schritte umfasst, die aus Folgendem bestehen:
(iv') dem Einwirkenlassen einer Temperatur, die höher als oder gleich T2 ist, auf das nach Schritt (iii) erhaltene Substrat, um das Entblockieren der blockierten Isocyanatfunktion(en) F2 zu bewirken;
(v') dem In-Kontakt-Bringen des nach Schritt (iv') erhaltenen Substrats mit mindestens einer Verbindung, die mindestens eine labile Wasserstofffunktion trägt, in überkritischem CO₂ unter Bedingungen, die eine Wechselwirkung zwischen der von der Verbindung getragenen labilen Wasserstofffunktion und einer Isocyanatfunktion auf der Substratoberfläche begünstigen; und
(vi') dem Isolieren des Substrats.

14. Verfahren nach Anspruch 13, wobei der Unterschied zwischen den jeweiligen Aktivierungstemperaturen der blockierten Isocyanatfunktionen F1 und F2, T2-T1, mindestens 20 °C, vorzugsweise von 30 °C bis 60 °C, beträgt.

15. Verfahren nach Anspruch 13 oder 14, wobei es sich bei der mindestens eine labile Wasserstofffunktion tragenden Verbindung um Wasser handelt, das zur Wechselwirkung mit den Isocyanatfunktionen fähig ist, indem es auf die Substratoberfläche kovalent gepfropfte Aminfunktionen bildet.

## Claims

1. Method for functionalizing the surface of a substrate, performed in a supercritical fluid medium, implementing at least the steps consisting of:
(i) providing a substrate having labile hydrogen functions on the surface;
(ii) bringing said substrate into contact, in supercritical CO₂, with at least one organic molecule carrying at least one blocked isocyanate function which can be activated by heating; and
(iii) subjecting the whole to a temperature sufficient to bring about the release of said blocked isocyanate function carried by the molecule, and the covalent grafting of said molecule by reaction of said isocyanate function with a labile hydrogen function on the surface of the substrate.

2. Method as claimed in the preceding claim, wherein the labile hydrogen functions carried by said substrate are selected from hydroxyl, primary amine, secondary amine and carboxylic acid functions, and preferably are hydroxyl functions.

3. Method according to either of the preceding claims, wherein said substrate is selected from organic polymeric matrices, more particularly made of cellulose fibres, such as cotton and paper, of wood, of polymethyl methacrylate, of ethylene-vinyl acetate, of partially or totally hydrolysed polyvinyl acetate, of polyamide(s) such as polyamide 6, polyamide 6-6, polyamide 11 and polyamide 12; said matrices optionally incorporating one or more inorganic fillers, such as fibres or beads of glass, of silica, of clays, aluminium hydroxide, aluminium oxyhydroxide and talc; and from inorganic substrates, such as substrates made of glass fibres or of silica.

4. Method according to any one of the preceding claims, wherein said blocked isocyanate function has the formula -NH-C(=O)-B, in which B represents a radical derived from a blocking agent BH selected from organic compounds containing one or more, preferably a single, labile hydrogen atom(s).

5. Method according to the preceding claim, wherein said blocking agent BH is selected from alcohols, phenols, amides, more particularly cyclic amides such as caprolactam, oximes, for example methyl ethyl ketone oxime or 2-butanone oxime, β-dicarbonyl compounds, pyrazoles, esters of hydroxycinnamic acid and C₁₋₆ alcohols, and from triazoles, imidazolines, tetrahydropyrimidines, and imidazoles.

6. Method according to any one of the preceding claims, wherein said blocked isocyanate function is a urethane function, more particularly of formula -NH-C(=O)-B, where B represents
a radical -OR, where R represents a linear or branched C₁ to C₆, more particularly C₂ to C₄, alkyl group; or
a radical -O-N=CR¹R², where R¹ and R² represent, independently of one another, a hydrogen atom or a linear or branched C₁ to C₆ alkyl group, preferably C₁ to C₄ alkyl groups; or
a radical -NR'R", where R' and R", together with the nitrogen atom carrying them, form a lactam cyclic group.

7. Method according to any one of the preceding claims, wherein step (iii) comprises heating to a temperature of between 75°C and 120°C, more particularly between 80°C and 100°C.

8. Method according to any one of the preceding claims, wherein said molecule, as well as a blocked isocyanate function, carries at least one radically polymerizable group containing ethylenic unsaturation(s), selected for example from (meth)acrylate groups, it being possible for said method to comprise, subsequent to step (iii), a radical polymerization step which is activated chemically or by irradiation, from radically polymerizable monomers, more particularly monomers containing ethylenic unsaturation(s), for example di(meth)acrylate monomers.

9. Method according to any one of the preceding claims, wherein said molecule carries at least two different blocked isocyanate functions, preferably at least two different urethane functions, said molecule being obtained more particularly by reaction of at least two different blocking agents BH as defined in any one of Claims 4 to 6 with a compound containing at least two isocyanate functions, preferably containing two or three isocyanate functions.

10. Method according to the preceding claim, wherein said compound containing at least two isocyanate functions is selected from diisocyanate and triisocyanate compounds, more particularly from aliphatic diisocyanates such as hexamethylene diisocyanate, isophorone diisocyanate, bis(4-isocyanatocyclohexyl)methane (H12MDI), hydrogenated xylylene diisocyanate and m-tetramethylxylylene diisocyanate; aromatic diisocyanates such as toluene diisocyanate, diphenylmethane diisocyanate, xylylene diisocyanate and paraphenylene diisocyanate, and aliphatic, cycloaliphatic and/or aromatic triisocyanates, such as the isocyanatobiurets of formula 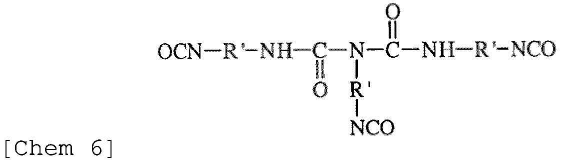 in which R' represent, independently of one another, a linear, branched or cyclic hydrocarbon radical containing from 2 to 30 carbon atoms.

11. Method according to any one of the preceding claims, wherein said molecule employed in step (ii) carries:
- a first blocked isocyanate function, preferably a urea or urethane function, denoted F1, which can be activated by heating at a temperature greater than or equal to a given temperature referred to as the activation temperature, denoted T1; and
- at least one, more particularly one or two, blocked isocyanate function(s), preferably of urethane or urea type, denoted F2, which optionally can be activated at a temperature greater than or equal to an activation temperature T2, T2 being strictly greater than T1,
said method comprising, in step (iii), heating at a temperature greater than or equal to T1 and, where appropriate, strictly less than T2, to bring about the release of said blocked isocyanate function F1 and the covalent grafting of said molecule by reaction of said isocyanate function with a labile hydrogen function on the surface of the substrate.

12. Method according to the preceding claim, wherein said blocked isocyanate function(s) F2 are functions, preferably nonthermolabile functions, carrying at least one group, denoted R_{f}, having properties of interest, said method comprising, subsequent to step (iii), a step (iv) consisting of recovering said substrate whose surface is functionalized with said groups R_{f}.

13. Method according to Claim 11, wherein said blocked isocyanate function(s) F2, preferably of urethane type, have an activation temperature T2 strictly greater than T1, said method comprising, subsequent to step (iii), at least the steps consisting of:
(iv') subjecting the substrate obtained at the end of step (iii) to a temperature greater than or equal to T2, to bring about the release of said blocked isocyanate function or functions F2;
(v') bringing said substrate obtained at the end of step (iv') into contact, in supercritical CO₂, with at least one compound carrying at least one labile hydrogen function, under conditions conducive to the interaction of the labile hydrogen function carried by said compound with an isocyanate function on the surface of the substrate; and
(vi') recovering said substrate.

14. Method according to Claim 13, wherein the difference between the respective activation temperatures of said blocked isocyanate functions F1 and F2, T2-Tl, is at least 20°C, preferably from 30°C to 60°C.

15. Method according to Claim 13 or 14, wherein said compound carrying at least one labile hydrogen function is water, capable of interacting with the isocyanate functions to form amine functions grafted covalently to the surface of the substrate.
